# EUROPÄISCHE PATENTANMELDUNG

(11) **EP 1 384 932 A1**
(43) Veröffentlichungstag der Anmeldung: **28.01.2004**
(21) Anmeldenummer: 03405528.5
(22) Anmeldetag: 14.07.2003
(51) Int. Cl.: F16L 25/00, F16L 37/02

(54) **Rohrmuffe für Kabelrohre**

(30) Priorität: 26.07.2002 CH 13142002
(71) Anmelder: Morach, Christoph, 8335 Hittnau (CH)
(72) Erfinder: Morach, Christoph, 8335 Hittnau (CH)
(74) Vertreter: Patentanwälte Breiter + Wiedmer AG

(57) **Zusammenfassung**

Eine Rohrmuffe (R) für Kabelrohre (10, 11) ist in Form eines auf Kabelrohrenden aufsteckbaren Hohlzylinders ausgebildet. Vom Innenmantel (1) der Rohrmuffe (R) ragen als wenigstens einen Widerhaken (2) gegen Zugkräfte (Z) ausgebildete Mittel nach innen ab. Die Widerhaken (2) erheben sich unter Bildung einer Gleitfläche (17) in Richtung der Längsmitte (4) der Rohrmuffe (R) kontinuierlich vom Innenmantel (1). Es wird eine Kante (3) und abschliessend einen zum Innenmantel abfallenden Absatz (12) gebildet, welcher von der Längsmitte (4) der Rohrmuffe (R) distanziert angeordnet ist.

## Beschreibung

Die vorliegende Erfindung betrifft eine Rohrmuffe für Kabelrohre in Form eines auf Kabelrohrenden aufsteckbaren Hohlzylinders.

Rohrmuffen dieser Art sind im Baugewerbe, z.B. beim Verlegen von Kabelrohren im Auf- und Unterputz, unentbehrlich, um Kabelrohre schnell und möglichst fest auf Stoss miteinander zu verbinden.

Problematisch ist die Vielzahl des Angebots von unterschiedlichen Fabrikaten für Kabelrohre, welche trotz Normung Durchmessertoleranzen aufweisen, weshalb die Normgrössen solcher Rohrmuffen selten genau passen. Folglich kann man entweder das betreffende Rohrende oft nicht oder nur mit zuviel Spiel in die betreffende Rohrmuffe eindrücken. Eine stabile Verbindung wird nach dem bekannten Stand der Technik z.B. mit Klebemitteln, einer Umwicklung der Rohrenden oder dgl. Mitteln erzielt.

Aus der US 5560163 sind Anschlusselemente, Verbindungs- und Verteilungsmuffen für gattungsfremde Wasserleitungen in Baufundamenten bekannt. Für die Fixierung werden Vorsprünge oder Höcker zum Eingriff in die Täler von Wellenrohren oder schraubenlinienförmig ausgebildeten Rohren erwähnt, aber nicht näher beschrieben.

Der vorliegenden Erfindung liegt die Aufgabe zugrunde, eine Rohrmuffe der eingangs erwähnten Art zu schaffen, welche bei Kabelrohren mit trotz Normierung variierendem Durchmesser und/oder unterschiedlicher Struktur der aussenseitigen Kabelenden eine stabile, sichere und gut herstellbare Verbindung von Kabelrohren bei erleichterter Handhabung gewährleisten.

Die Aufgabe wird erfindungsgemäss dadurch gelöst, dass vom Innenmantel der Rohrmuffe als wenigstens einen Widerhaken gegen Zugkräfte ausgebildete Mittel nach innen abragen, wobei sich die Widerhaken unter Bildung einer Gleitfläche in Richtung der Längsmitte der Rohrmuffe kontinuierlich vom Innenmantel erheben, eine Kante und abschliessend einen zum Innenmantel abfallenden Absatz bilden, welcher in Abstand von der Längsmitte der Rohrmuffe angeordnet ist. Spezielle und weiterbildende Ausführungsformen der Rohrmuffe ergeben sich aus den abhängigen Patentansprüchen.

Die erfinderische Massnahme mit wenigstens einem Widerhaken gewährleistet auch bei erheblichem Spiel zwischen Rohrmuffe und eingesteckten Kabelrohrenden eine stabile, insbesondere gegen Zugkräfte sichere Verbindung zwischen zwei Kabelrohren. Die nicht federnden Widerhaken graben sich bei Kraftanwendung in Zugrichtung in den Aussenmantel der Kabelrohrenden ein. Mit anderen Worten müssen die Widerhaken in an sich bekannter Weise so ausgebildet sein, dass sie einer Stosskraft beim Einsetzen eines Kabelrohrs einen geringen, einer Zugkraft dagegen einen grossen Widerstand entgegensetzen, der in der Regel nur durch gleichzeitiges Drehen der Kabelrohre überwunden werden kann. Ausserhalb der Kabelrohrenden bzw. ausserhalb der Rohrmuffe kann das Kabelrohr gleich oder unterschiedlich wie das in die Muffe eingesteckte Rohrende ausgebildet sein. Beispielsweise kann ein Wellenrohr zylindermantelförmig ausgebildete Endbereiche haben.

Die Anzahl der Widerhaken ist beliebig, bei mehr als einem Widerhaken können diese stochastisch verteilt sein, sie sind jedoch vorzugsweise nach einem Ordnungssystem ausgebildet, beispielsweise regelmässig entlang eines Innenumfangs der Rohrmuffe, können jedoch auch in Längsrichtung der Rohrmuffe versetzt sein. Weiter können paarweise nebeneinander oder in Längsrichtung der Kabelmuffe hintereinander liegende Widerhaken angeordnet sein.

Für eine gut herstellbare Verbindung des betreffenden Kabelrohres in der Rohrmuffe ist es erfindungswesentlich, dass ein Widerhaken unter Ausbildung einer Gleitfläche in Richtung der Rohrmitte kontinuierlich ansteigt, dann vorzugsweise unter Ausbildung einer scharfen, sich bei Anwendung einer Zugkraft einschneidenden Kante einen steil, senkrecht oder hinterschnitten abfallenden Absatz hat. Die Gleitfläche kann als schräge Ebene, aber auch mit degressiver oder progressiver Krümmung ansteigen. Wie in allen anderen Fällen sind auch diese Widerhaken in Abstand von der Längsmitte angeordnet.

Eine einfache Zentrierung der Kabelrohrenden in der Rohrmuffe wird erreicht, wenn sich pro Einsteckende zwei Widerhaken diametral gegenüber liegen, welche bezüglich der Längsrichtung der Rohrmuffe auch versetzt angeordnet sein können. Bei der Ausbildung von mehr als zwei Widerhaken pro Einsteckseite der Rohrmuffe sind diese bevorzugt in Form eines regelmässigen Vielecks angeordnet, nach einer speziellen Ausführungsform auch in Längsrichtung der Rohrmuffe versetzt. Weiter können die Widerhaken der beiden M uffenhälften um den halben Winkel zwischen zwei benachbarten Widerhaken versetzt sein, z.B. bei drei Widerhaken pro Muffenhälfte um 60°.

Um die Kabelrohrenden so in die Rohrmuffe einstossen zu können, dass sie in ihrer Endlage im Bereich der Längsmitte auf Stoss angeordnet sind, ist zweckmässig längsmittig auf der Innenseite des Hohlzylinders ein Anschlag ausgebildet, welcher als Flansch umlaufend oder als wenigstens einen Nocken abragt.

Eine vorteilhafte Ausgestaltung der Erfindung besteht darin, dass der Aussenmantel der Rohrmuffe von beiden Stirnseiten in Richtung der Längsmitte einen konischen Anzug aufweist und auf beiden Einsteckseiten mehrere, vorzugsweise regelmässig über den Umfang verteilte, sich in Richtung der Längsmitte der Rohrmuffe vertiefende Ausnehmungen aufweist. Dadurch wird die Möglichkeit geschaffen, an der Rohrmuffe ein Werkzeug anzusetzen, um diese auf ein Kabelrohrende aufzudrücken oder aufzudrehen und wieder zu entfernen. Weiter kann die Rohrmuffe dank dieser Ausnehmungen verschiebungsfest in einem Bauwerk eingegipst oder einbetoniert werden.

Die erfindungsgemässe Rohrmuffe besteht in der Praxis aus einem einstückig gespritzten Kunststoff- oder einem leicht bearbeitbaren Metallteil, beide müssen im rauhen Baubetrieb schlagfest sein. Diese Rohrmuffe ist für die Verbindung aller im Baugewerbe üblichen Kabelrohre geeignet, mit glattem (d.h. zylinderförmigem), gewelltem, schraubenlinienförmigem, gerilltem, geriffeltem oder sonstwie ausgebildetem Aussenmantel, mit oder ohne Aussenbeschichtung. Flexible Kunststoffrohre mit zylindermantelförmiger Aussenfläche können ebenso in die Rohrmuffe gesteckt und verankert werden wie metallische Wellenrohre, um nur einige Beispiele zu nennen. Selbstverständlich muss die Rohrmuffe bzw. deren Widerhaken aus härterem Material als das Kabelrohr bestehen.

Die erfindungswesentliche Ausbildung von Widerhaken bewirkt, dass sich diese bei einer Anwendung einer Zugkraft in den Aussenmantel der eingesteckten Kabelrohre einschneiden, sei es in die glatte Aussenfläche oder in den nächsten Wellenberg.

Für eine problemlose Erkennung einer bestimmten Rohrmuffe besteht diese nach einer vorteilhaften Ausführungsform aus einem mit einer Kennfarbe eingefärbten Kunststoffteil, was eine allfällige Verwechslung sofort erkennbar macht.

Die Erfindung wird anhand von in der Zeichnung dargestellten Ausführungsbeispielen, welche auch Gegenstand von abhängigen Ansprüchen sind, näher erläutert. Es zeigen schematisch:
- - Fig. 1: eine Seitenansicht einer Rohrmuffe,
- - Fig. 2: einen axialen Längsschnitt der Rohrmuffe gemäss Fig. 1 mit eingesteckten Kabelrohren,
- - Fig. 3: einen Querschnitt der Rohrmuffe gemäss Fig. 1, und
- - Fig. 4: ein vergrössertes Detail von Fig. 2.

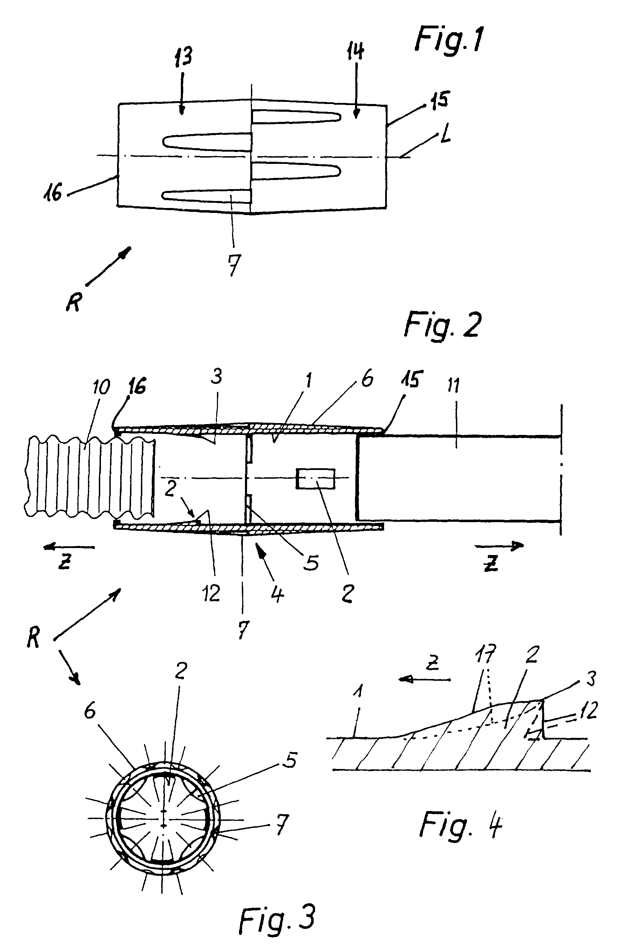

Die Rohrmuffe R gemäss Fig. 1 bis 3 ist als Hohlzylinder aus einem geeigneten harten Kunststoffspritzteil ausgebildet. Die Rohrmuffe R dient dem Zusammenstecken von Kabelrohren 10, 11, vorliegend einem metallischen Wellenrohr 10 und einem flexiblen Kunststoffrohr 11 mit zylindermantelförmiger, glatter Aussenfläche.

Vom Innenmantel 1 der Rohrmuffe R ragen je Einsteckseite 13, 14 zwei Widerhaken 2 radial nach innen ab. Diese diagonal gegenüberliegenden Widerhaken 2 e rheben s ich kontinuierlich in Richtung d er L ängsmitte 4 der Rohrmuffe R, bilden eine Kante 3 und abschliessend einen steil zum Innenmantel 1 abfallenden Absatz 12. Diese Absätze 12 sind von der Längsmitte 4 der Rohrmuffe R deutlich distanziert.

Die flexiblen Kabelrohre 10, 11 in der Rohrmuffe R sind mit zwei sich diametral gegenüber liegenden Widerhaken 2 pro Einsteckseite 13, 14 ausreichend zentriert. Die Kabelrohre 10, 11 können mit geringem Widerstand eingestossen werden, sind jedoch in Zugrichtung Z mit normaler Kraftanwendung ohne gleichzeitiges Drehen nicht mehr entfernbar.

Die Widerhaken 2 der einen Einsteckseite 13 der Rohrmuffe R sind gegenüber den Widerhaken 2 der anderen Einsteckseite 14 bezüglich des Umfangs versetzt, vorliegend um etwa 90°, also um den halben Winkel zwischen den beiden Widerstandshaken 2.

Im Bereich der Längsmitte 4 der Rohrmuffe R ragt innenseitig ein wenigstens teilweise umlaufender Flansch 5 ab, welcher beim Einstossen der Kabelrohre 10, 11 einen Anschlag bildet und deren Endlage Stoss auf Stoss in der Muffenmitte festlegt.

Der Aussenmantel 6 der Rohrmuffe R weist von beiden Stirnseiten 15, 16 in Richtung der Längsmitte 4 einen konischen Anzug auf. Über den Umfang sind in Längsrichtung L der Rohrmuffe R mehrere, sich auf beiden Einsteckseiten 13, 14 in Richtung der Längsmitte 4 vertiefende Ausnehmungen 7 ausgespart.

In Fig. 4 ist ein in den Innenraum der Rohrmuffe R abragender Widerhaken 2 vergrössert dargestellt. Dieser weist eine mit degressiver Krümmung ansteigende Gleitfläche 17 zum Einführen eines Kabelrohrs 10, 11 und den Absatz 12 mit der Kante 3 auf. Eine Variante des Verlaufs einer mit progressiver Krümmung ansteigender Gleitfläche 17 ist punktiert angedeutet. Bei einer Kraftanwendung in Zugrichtung Z verhakt das Kabelrohr 10, 11 durch Einschneiden sowohl in einer zylindermantelförmig als auch wellenförmig ausgebildeten Aussenfläche eines Kabelrohrs 10, 11 und fixiert dieses. Nach einer speziellen Ausführungsform kann der Absatz 12 auch hinterschnitten ausgebildet sein, was mit einer gestrichelten Linie angedeutet ist, und oft die beste Lösung darstellt.

Eine Rohrmuffe R gemäss Fig. 1 bis 4 ist zur Verbindung aller Kabelrohre in optimaler und allen Anforderungen gerecht werdender Weise geeignet.

## Patentansprüche

1. Rohrmuffe (R) für Kabelrohre (10, 11) in Form eines auf Kabelrohrenden aufsteckbaren Hohlzylinders,
**dadurch gekennzeichnet, dass**
vom Innenmantel (1) der Rohrmuffe (R) als wenigstens einen Widerhaken (2) gegen Zugkräfte (Z) ausgebildete Mittel nach innen abragen, wobei sich die Widerhaken (2) unter Bildung einer Gleitfläche (17) in Richtung der Längsmitte (4) der Rohrmuffe (R) kontinuierlich vom Innenmantel (1) erheben, eine Kante (3) und abschliessend einen zum Innenmantel abfallenden Absatz (12) bilden, welcher in Abstand von der Längsmitte (4) der Rohrmuffe (R) angeordnet ist.

2. Rohrmuffe (R) nach Anspruch 1, **dadurch gekennzeichnet, dass** die Gleitfläche (17) als schräge Ebene, auch mit degressiver oder progressiver Krümmung, und der Absatz (12) steil, senkrecht oder hinterschnitten ausgebildet ist.

3. Rohrmuffe (R) nach Anspruch 2, **dadurch gekennzeichnet, dass** in ihrer Längsrichtung (L) mehrere Widerhaken (2) hintereinander liegend und/oder entlang eines Umfangs angeordnet sind.

4. Rohrmuffe (R) nach einem der Ansprüche 1 bis 3, **dadurch gekennzeichnet, dass** sich pro Einsteckseite (13, 14) zwei Widerhaken (2) diametral gegenüberliegen.

5. Rohrmuffe (R) nach Anspruch 4, **dadurch gekennzeichnet, dass** die Widerhaken (2) der beiden Einsteckseiten (13, 14) bezüglich des Umfangs versetzt sind, vorzugsweise um den halben Winkel zwischen zwei benachbarten Widerhaken (2).

6. Rohrmuffe (R) nach einem der Ansprüche 1 bis 5, **dadurch gekennzeichnet, dass** im Bereich der Längsmitte (4) innenseitig ein wenigstens teilweise umlaufender Flansch (5) oder wenigstens ein Nocken als Anschlag für die Kabelrohre (10,11) abragt.

7. Rohrmuffe (R) nach einem der Ansprüche 1 bis 6, **dadurch gekennzeichnet, dass** der Aussenmantel (6) von beiden Stirnseiten (15, 16) in Richtung der Längsmitte (4) einen konischen Anzug aufweist.

8. Rohrmuffe (R) nach einem der Ansprüche 1 bis 7, **dadurch gekennzeichnet, dass** der Aussenmantel (6) über den Umfang verteilte, sich auf beiden Einsteckseiten (13, 14) in Richtung der Längsmitte (4) vertiefend erstreckende Ausnehmungen (7) aufweist.

9. Rohrmuffe (R) nach einem der Ansprüche 1 bis 8, **dadurch gekennzeichnet, dass** sie aus einem schlagfesten Material besteht, insbesondere aus einem harten Kunststoff oder aus einem leicht bearbeitbaren Metall.

10. Rohrmuffe (R) nach Anspruch 9, **dadurch gekennzeichnet, dass** sie aus einem einstückigen, mit einer Kennfarbe eingefärbten Kunststoffspritzteil besteht.
